# EUROPEAN PATENT SPECIFICATION

(11) **EP 1 527 721 B1**
(45) Date of publication and mention of the grant of the patent: **27.12.2006**
(21) Application number: 04025634.9
(22) Date of filing: 28.10.2004
(51) Int. Cl.: A47J 31/44

(54) **Immersion device for heating a liquid**
Eintauchgerät zum Erwärmen einer Flüssigkeit
Dispositif d'immersion pour chauffer un fluide

(30) Priority: 31.10.2003 IT to20030168
(43) Date of publication of application: 04.05.2005
(73) Proprietor: RANCILIO MACCHINE PER CAFFE' S.p.A., I-20010 Villastanza di Parabiago (Milano) (IT)
(72) Inventor: Carbonini, Carlo, Rancilio Macchine Per Caffe' SPA, 20010 Villastanza Di Parabiago (Milano) (IT)
(74) Representative: Robba, Pierpaolo

(56) References cited:
- US-A- 5 464 574
- US-A- 5 768 975

## Description

The present invention concerns an immersion device for heating a liquid, particularly a steam wand for an expresso coffee machine.

More precisely the present invention concerns a device for heating a liquid which is quite easy to be kept clean and in proper hygienic conditions.

### Background art

Immersion devices are known for heating a liquid by injecting high temperature air, steam or other aeriform substances.

A typical example of such devices is a steam wand of professional expresso coffee machines.

These steam wands substantially consist of a tube, generally made of chromed brass or stainless steel and in fluid communication at one of their ends with a steam supply valve; suitable seal joints allow moving the tube with a certain degree of freedom; at its opposite end, which has to be plunged in the liquid, the tube is provided with a suitable number of holes of suitable size for injecting the steam in the liquid to be heated.

Known steam wands are used as follows: the user puts the container with the liquid to be heated under the steam wand dipping the wand end in said liquid, injects steam as long as required and takes the container away from the wand when the liquid has reached the desired temperature.

Moreover after each use the user has to clean the outer steam wand surface from rests of the treated liquid (milk, chocolate or something else) that settled thereon due to the cooling.

Particularly, when the steam wand is used for heating milk, that cleaning step is made difficult by the typical film of curdled milk that adheres to outer steam wand surface.

In order to solve that problem, in the past it has been suggested making steam wands of plastic material or provided with teflon coatings -see for example IT 1,235,868.

Nevertheless the known devices are affected by a number of inconveniences, such as poor mechanic strength of the steam wand and/or the risk that parts of the coating come off due to the thermal and mechanic shocks the wand continuously undergoes.

From US_5, 464, 574 a device for the preparation of frothed milk for cappuccino is known. Such a Known device comprises an inner pipe or tube having one end adapted for connecting to a source of a high temperature steam and an outer pipe which covers the inner pipe and is preferably made of plastic.
The above known device suffers the same problem above evidenced, i.e. the risk that parts of the outer pipe come off due to the thermal and mechanic shocks the wand continuously undergoes.

An object of the present invention is providing an immersion device for heating a liquid in which the risk that, in use, parts of a covering came off is minimised and encrusting of heated liquid on the external steam wand surface is hindered.

This and other objects are accomplished with an immersion device for heating a liquid according to the present invention, as defined in the appended claims.

Since usually the volume of the liquid to be heated is much greater than the one of the heating device and said liquid is in turbulent motion, for bringing said liquid to the desired temperature injecting steam at a much higher temperature is required.

If the heating device is made of a conducting material, particularly of metal, its external surface will have a temperature quite close to the steam temperature; consequently also the layer of liquid in contact with said external surface will reach a temperature proximate to the steam temperature and much higher to the temperature of the rest of the liquid volume, due to conduction thermal exchange.

Advantageously the thermoinsulating material covering around the metal core of the heating device causes a lower temperature of the external surface of the device, preferably down to values near to the temperature to which the treated liquid is desired to be brought, without overheating the liquid layer adjacent to said surface above the boiling point. So doing generation is avoided of a overheated liquid film on the external surface of the immersion heating device, and also consequent encrusts.

Preferably the material used for the external covering of said device, apart from being a good thermal insulator, can be worked in a simple way, allows obtaining smooth and sufficiently hard surfaces and has a good resistance to frequent and repeated thermal shocks, typical of the heating cycle of liquid in an expresso coffee machine.

### List of Figures

A preferred embodiment of the present invention will now be described with reference to the following schematic Figures, wherein:
Figure 1 is a side view of an immersion device for heating a liquid according to a preferred embodiment of the present invention;
Figure 2 is a cross section according to line II-II of the device of Figure 1;
Figure 3 is a schematic diagram of the temperature in the side wall of the device of Figure 1.

### Detailed description

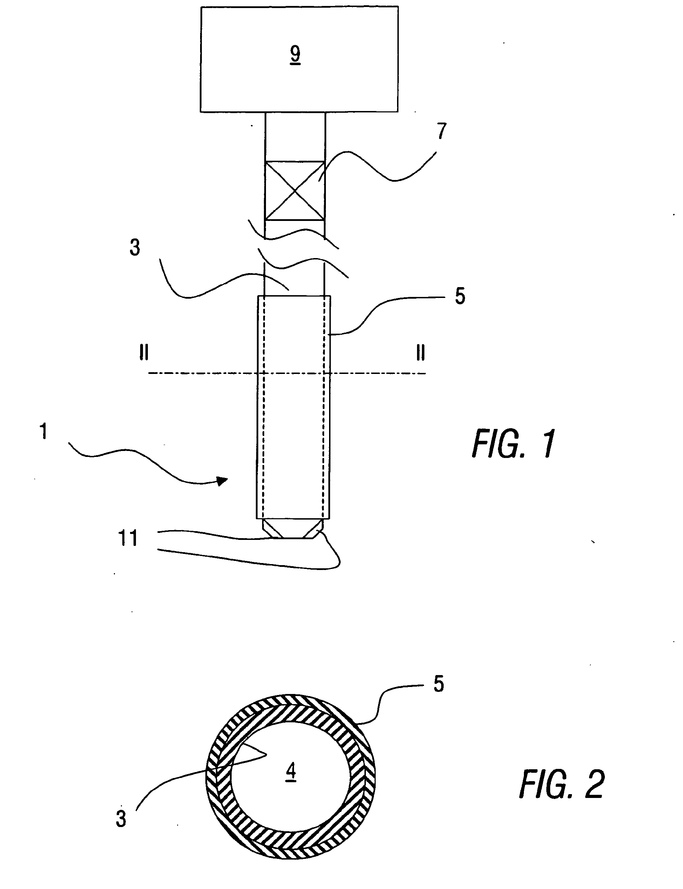

Referring to Figures 1 and 2, a device is shown for heating liquids according to an embodiment of the present invention, particularly a steam wand for an expresso coffee machine, referred to with the overall reference numeral 1.

Said steam wand comprises a tube 3 connected, at one of its ends, to a valve 7 for supplying steam; the valve is in turn in fluid communication with a source 9 of steam or of other high temperature aeriform substances. Moreover the tube is provided with one or more nozzles 11 an its other end, for injecting said steam or other aeriform substances in the liquid to be heated.

Said tube 3 is made of metal -preferably brass or stainless steel, in a conventional way, is provided with a longitudinal cylindrical duct 4 for allowing steam or other aeriform substances to flow, and is externally coated with a covering 5 made of thermally insulating material, at least in its portion that during operation contacts the liquid to be warmed.

This way, in the portion provided with said covering 5, the temperature of the steam wand outer surface is appreciably lower than the external surface temperature of the metal tube 3, and such to prevent a) the overheating of the liquid contacting the wand and b) the encrustings of overheated liquid.

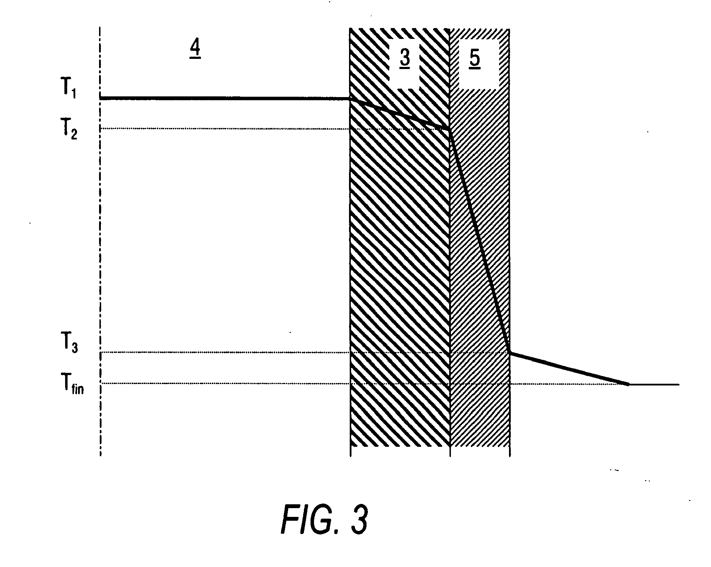

The temperature profile in the side wall of the steam wand is shown in Figure 3. In order to bring the treated liquid to the desired temperature T_{fin}, it is necessary feeding steam at a temperature T₁ >> T_{fin}. Since the tube 3 is made of metallic material, that is a good thermal conductor, the temperature gradient along its side wall will be quite small and the temperature T₂ on the external surface of said tube will be near to T₁. On the contrary, since the covering 5 is made of thermally insulating material, the temperature gradient along said covering will be much greater and, if a suitable covering thickness is chosen, the temperature of its external surface T₃ will be near T_{fin}.

Preferably said covering is obtained from a plastic material that not only has good thermal insulation characteristics, but also can be worked with inexpensive processes, allows obtaining an end product with a smooth surface and with a good resistance to thermal shocks.

Particularly satisfying results can be obtained using a polymer chosen among polyetherimide (PEI), polybutylenterephthalate (PBT), polysulphone (PSU), poly(phenilene sulphide) (PPS), polyetheretherketone (PEEK), polyamide (PA), polycarbonate (PC), polyoxymethylene (POM), polyethylene terephthalate (PET). Said polymers can be used pure or reinforced with mineral fibres.

As an alternative to the aforesaid polymers, cheaper plastic material can be used which are suitable for being painted so as to provide to the covering both the same properties provided by said polymers and a pleasant look.

In order to further compensate the thermal expansion of the internal components of the device, and particularly the steam supply tube 3, during use, the covering is provided, according to the invention, with a shell-like shape and filled with an elastomeric thermoplastic material, such as santoprene or a similar mix.

Santoprene, since it is a gummy material, adsorbs in a satisfying way the instant thermal shocks the covering 5 undergoes without transmitting them to the covering itself.

The covering 5 can be laid on the metal tube 3 with an overmolding -, fitting- or assembly process.

In an overmolding process, the covering 5 is moulded with an injection mould in which the metal tube 5 has been previously set and positioned; the covering 5 is laid on the metal tube 3 with an injection operation.

In a fitting process, the covering 5 is previously made in an injection mould and with further operations, if any; afterwards the metal tube 3 is fitted in the covering 5 and then positioned and sealed with screw-fastening, suitable adhesives or sealants.

In the assembly process, the covering 5 is previously made as two separate half-shells with an injection mould and further operations, if any; after these half-shells are laid on the metal tube 3 and then positioned and sealed with screw-fastening, suitable adhesives or sealants.

According to the laying on process, the covering 5 can have a thickness comprised between about 0,8 mm and 5 mm.

The embodiments previously described are non limiting examples and can be subject to modifications without departing from the scope of the present invention.

Particularly, even if in the described embodiments a heating device has been mentioned with one duct only, a device according to the present invention can be advantageously used in devices provided with several ducts for injecting different aeriform substances in the liquid, such as in milk foaming systems in which steam and air are injected through respective ducts.

## Claims

1. Immersion device for heating a liquid (1), comprising
- a tube (3) adapted to be connected at one of its ends to a source of a high temperature aeriform substance, and provided at the other of its end with one or more nozzles (11) suitable for injecting said aeriform substance in said liquid and further provided with a longitudinal duct (4) suitable for allowing said aeriform substance to flow from said source to said one or more nozzles, and
- a covering (5), made of thermally insulating material, for covering the external surface of said tube (3), at least at the portion of said tube contacting said liquid during use,
**characterised in that** said covering (5) has the shape of a shell filled with a thermoplastic elastomeric material.

2. Device (1) according to claim 1, **characterised in that** said tube (3) is made of metal, preferably brass or stainless steel.

3. Device (1) according to claim 1 or 2, **characterised in that** said covering (5) is made of a plastic material.

4. Device (1) according to claim 3, **characterised in that** said plastic material is suitable for being painted.

5. Device (1) according to any one of claims 1 to 4, **characterised in that** said covering (5) is made of a polymer chosen from the following group: polyetherimide (PEI), polybutylenterephthalate (PBT), polysulphone (PSU), poly(phenilene sulphide) (PPS), polyetheretherketone (PEEK), polyamide (PA), polycarbonate (PC), polyoxymethylene (POM), polyethylene terephthalate (PET).

6. Device (1) according to claim 5, **characterised in that** said polymer is reinforced with one or more mineral fibres.

7. Device (1) according to any one of claims 1 to 6, **characterised in that** said thermoplastic material is santoprene or a similar mix.

8. Device (1) according to any one of claims 1 to 7, wherein said covering (5) is laid on said tube (3) with an overmolding-, fitting- or assembly process.

9. Device (1) according to any one of claims 1 to 8, **characterised in that** said covering (5) has a thickness comprised between 0,8 and 5 mm.

10. Device (1) according to any of the preceding claims, **characterised in that** said aeriform substance is steam and said tube is the steam wand of an espresso coffee machine.

## Patentansprüche

1. Eintauchgerät zum Erwärmen einer Flüssigkeit (1), das Folgendes umfasst:
- ein Rohr (3), das dazu ausgebildet ist, an seinem einen Ende an einer Quelle gasförmiger Substanz hoher Temperatur angeschlossen zu werden und das an seinem anderen Ende mit einer oder mehreren Düsen (11) versehen ist, die zur Injektion jener gasförmigen Substanz in die Flüssigkeit geeignet sind und das weiterhin mit einem passenden länglichen Kanal (4) ausgestattet ist, der die Strömung der gasförmigen Substanz von der Quelle zu der einen oder mehreren Düsen erlaubt, sowie
- ein Überzug (5) aus thermisch isolierendem Material, um die Mantelfläche jenes Rohrs (3) zumindest in jenem Bereich, der bei Gebrauch mit dieser Flüssigkeit in Berührung kommt, zu bedecken,
**dadurch gekennzeichnet, dass** jener Überzug (5) die Form einer mit einem thermoplastischen Elastomer gefüllten Schale aufweist.

2. Gerät (1) nach Anspruch 1,
**dadurch gekennzeichnet, dass** jenes Rohr (3) aus Metall, vorzugsweise Messing oder rostfreiem Stahl, hergestellt ist.

3. Gerät (1) nach Anspruch 1 oder 2,
**dadurch gekennzeichnet, dass** jener Überzug (5) aus Kunststoff hergestellt ist.

4. Gerät (1) nach Anspruch 3,
**dadurch gekennzeichnet, dass** sich jener Kunststoff für Lackierungen eignet.

5. Gerät (1) nach einem der Ansprüche 1 bis 4,
**dadurch gekennzeichnet, dass** jener Überzug (5) aus einem Polymer hergestellt ist, das aus folgenden Gruppen ausgewählt wurde: Polyetherimide (PEI), Polybutylenterephthalat (PBT), Polysulfon (PSU), Poly (phenylsulfid) (PPS), Polyetheretherketon (PEEK), Polyamid (PA), Polykarbonat (PC), Polyoxymethylene (POM), Polyethyleneterephthalate (PET).

6. Gerät (1) nach Anspruch 5,
**dadurch gekennzeichnet, dass** jenes Polymer mit einer oder mehreren Mineralfasern verstärkt ist.

7. Gerät (1) nach einem der Ansprüche 1 bis 6,
**dadurch gekennzeichnet, dass** jenes thermoplastische Material Santoprene oder eine ähnliche Mischung ist.

8. Gerät (1) nach einem der Ansprüche 1 bis 7,
wobei jener Überzug (5) auf dieses Rohr (3) nach einem Beschichtungs-, Passungs- oder Fügeverfahren aufgebracht wird.

9. Gerät (1) nach einem der Ansprüche 1 bis 8,
**dadurch gekennzeichnet, dass** jener Überzug (5) eine Dicke zwischen 0,8 und 5 mm aufweist.

10. Gerät (1) nach einem der vorhergehenden Ansprüche,
**dadurch gekennzeichnet, dass** jene gasförmige Substanz Dampf ist und dieses Rohr den Dampfstab einer Espressokaffeemaschine darstellt.

## Revendications

1. Dispositif à immersion permettant de chauffer un liquide (1), comprenant
- un tube (3) conçu pour être relié, au niveau de l'une de ses extrémités, à une source d'une substance aériforme à haute température et doté, au niveau de son autre extrémité, d'une ou plusieurs buses (11) appropriées à l'injection de ladite substance aériforme dans ledit liquide et comprenant en outre un conduit longitudinal (4) approprié pour permettre à ladite substance aériforme de s'écouler de ladite source vers lesdites une ou plusieurs buses, et
- un revêtement (5), formé d'une matière thermo-isolante, pour recouvrir la surface externe dudit tube (3) au moins au niveau de la partie dudit tube en contact avec ledit liquide en cours d'utilisation,
**caractérisé en ce que** ledit revêtement (5) a la forme d'une coque remplie d'une matière élastomère thermoplastique.

2. Dispositif (1) selon la revendication 1, **caractérisé en ce que** ledit tube (3) est fait de métal, de préférence de laiton ou d'acier inoxydable.

3. Dispositif (1), selon la revendication 1 ou 2, **caractérisé en ce que** ledit revêtement (5) est fait d'une matière plastique.

4. Dispositif (1) selon la revendication 3, **caractérisé en ce que** ladite matière plastique est conçue pour être peinte.

5. Dispositif (1) selon l'une quelconque des revendications 1 à 4, **caractérisé en ce que** ledit revêtement (5) est fait d'un polymère choisi dans le groupe suivant : le polyétherimide (PEI), le poly(téréphtalate de butylène) (PBT), la polysulfone (PSU), le poly(sulfure de phénylène) (PPS), la polyéther-éther-cétone (PEEK), le polyamide (PA), le polycarbonate (PC), le polyoxyméthylène (POM), le poly(téréphtalate d'éthylène) (PET).

6. Dispositif (1) selon la revendication 5, **caractérisé en ce que** ledit polymère est renforcé par une ou plusieurs fibres minérales.

7. Dispositif (1) selon l'une quelconque des revendications 1 à 6, **caractérisé en ce que** ladite matière thermoplastique est du santoprène ou un mélange similaire.

8. Dispositif (1) selon l'une quelconque des revendications 1 à 7, dans lequel ledit revêtement (5) est déposé sur ledit tube (3) par un procédé de surmoulage, d'ajustement ou d'assemblage.

9. Dispositif (1) selon l'une quelconque des revendications 1 à 8, **caractérisé en ce que** ledit revêtement (5) a une épaisseur comprise entre 0,8 et 5 mm.

10. Dispositif (1) selon l'une quelconque des revendications précédentes, **caractérisé en ce que** ladite substance aériforme est de la vapeur d'eau et ledit tube est le tube à vapeur d'une machine à café expresso.
